(19)

Europäisches
Patentamt
European
Patent Office
Office européen
des brevets

(11) **EP 1 898 177 A1**

(12) **EUROPEAN PATENT APPLICATION**

(43) Date of publication:
**12.03.2008 Bulletin 2008/11**

(51) Int Cl.:
*G01B 21/04* (2006.01)    *G01B 3/20* (2006.01)
*G01D 3/036* (2006.01)

(21) Application number: **07017508.8**

(22) Date of filing: **06.09.2007**

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK YU**

(30) Priority: **06.09.2006 JP 2006242083**

(71) Applicant: **MITUTOYO CORPORATION**
**Kawasaki-shi,**
**Kanagawa 213-8533 (JP)**

(72) Inventor: **Kawatoko, Osamu,**
**c/o Mitutoyo Corporation**
**Kawasaki-shi**
**Kanagawa 213-8533 (JP)**

(74) Representative: **Grünecker, Kinkeldey,**
**Stockmair & Schwanhäusser**
**Anwaltssozietät**
**Maximilianstrasse 58**
**80538 München (DE)**

(54) **Caliper Gauge**

(57)      A caliper gauge (1) includes: a temperature sensor (13) that is provided on a slider (11) and detects a temperature of a main beam (10); a temperature information storage (14) that stores the temperature of the main beam (10) detected by the temperature sensor (13) and a displacement of the slider (11) relative to the main beam (10) that an encoder (12) detects concurrently with the temperature detection as temperature information of the main beam (10); and a processing unit (16) that calculates a thermal expansion amount of the main beam (10) based on the temperature information of the main beam (10) stored in the temperature information storage (14) to compensate the displacement of the slider (11) relative to the main beam (10) detected by the encoder (12) based on the calculated thermal expansion amount.

FIG.1

**Description**

**BACKGROUND OF THE INVENTION**

**1. FIELD OF THE INVENTION**

The present invention relates to a caliper gauge. Specifically, the present invention relates to a caliper gauge that detects a temperature of a main beam using a temperature sensor to compensate a measurement error on account of thermal expansion of the main beam.

**2. DESCRIPTION OF RELATED ART**

A digital caliper gauge includes: a main beam that has a first measuring jaw (one of an inside measuring jaw and an outside measuring jaw); a slider that has a second measuring jaw (the other of the inside measuring jaw and the outside measuring jaw), the slider being movable relative to the main beam; an encoder that detects a displacement of the slider relative to the main beam as an electric signal; and a digital display that displays the displacement of the slider based on the electric signal from the encoder.

In order to measure an article, an operator holds the main beam in one hand with the thumb placed on the slider and slides the slider along the main beam with the thumb to make the inside and outside jaws provided on the main beam and the slider abut to the article and sandwich a target portion of the article. In this state, a dimension of the article to-be-measured can be obtained from a value displayed on the digital display.

However, in such a measuring process, since the main beam is directly held by hand, heat in the hand may cause thermal expansion of the main beam and, accordingly, a measurement error. Hence, when a highly precise measurement is required, a method for eliminating the thermal expansion of the main beam is used. For example, in an arrangement where the main beam is fixed to a jig and the slider is moved via a thermally-insulating material in a temperature-controlled room, the thermal expansion of the main beam can be eliminated.

Since the measurement error on account of the thermal expansion of a measuring tool poses a problem in caliper gauges and other measuring tools, various suggestions have been made to avoid the measurement error on account of the thermal expansion. For instance, JP-A-2000-346601 discloses a micrometer in which three temperature sensors are provided on an arc main body and an average value of the temperatures at three points is obtained as a temperature of the main body to be used to correct the measurement error. This method can also be applied to digital caliper gauges.

However, in the measurement conducted in a temperature-controlled room, measuring operations are cumbersome, which may ruin usability of caliper gauges. On the other hand, when three temperature sensors are used in the measurement as disclosed in the above-mentioned document, additional number of components are required and wiring becomes complicated, resulting in cost increase. Further, the average value of the temperatures at three points on the main body is used as the temperature of the main body, where temperature distribution on the main body is not taken into consideration.

**SUMMARY OF THE INVENTION**

An object of the present invention is to provide a caliper gauge that can inexpensively and easily correct a measurement error on account of thermal expansion of a main beam to achieve a highly precise measurement.

A caliper gauge according to an aspect of the invention, includes: a main beam that includes a first measuring jaw; a slider that is movably provided on the main beam and includes a second measurement jaw, the first measurement jaw and the second measurement jaw abutting to a target portion of an article to-be-measured; an encoder that detects a displacement of the slider relative to the main beam as an electric signal; a temperature sensor that is provided on the slider and detects a temperature of the main beam; and a processing unit that, when the slider is moved to a position on the main beam, corrects the displacement of the slider relative to the main beam detected by the encoder based on the temperature of the main beam detected by the temperature sensor.

According to the aspect of the invention, when the slider is moved to a position relative to the main beam, the temperature sensor provided on the slider detects the temperature of the main beam and the processing unit corrects, based on the detected temperature of the main beam, the displacement of the slider relative to the main beam detected by the encoder.

In other words, the processing unit calculates the thermal expansion amount of the main beam based on the temperature information of the main beam and subtracts the calculated thermal expansion amount from the displacement of the slider relative to the main beam detected by the encoder to correct the measurement error on account of the thermal expansion of the main beam. Accordingly, the measurement error on account of the thermal expansion of the main beam can be avoided to achieve a highly precise measurement.

In the caliper gauge according to the aspect of the invention, since the measurement error on account of the thermal expansion of the main beam can be corrected, highly precise measurement can be achieved without employing a special method such as conducting a measurement in a temperature-controlled room to eliminate the thermal expansion of the main beam. Hence, the main beam can be held by hand in a manner similar to the related-art caliper gauge, so that a highly precise measurement can be easily conducted.

In the caliper gauge according to the aspect of the invention, since the temperature sensor is provided on the slider, the temperature sensor can be moved together with the slider along the main beam. Accordingly, the temperature on a target portion of the main beam can be measured by a single temperature sensor, which reduces the number of components and simplifies the wiring, thereby reducing production cost.

The caliper gauge may further include: a temperature information storage that stores the temperature of the main beam detected by the temperature sensor and the displacement of the slider relative to the main beam which is detected by the encoder concurrently with the temperature detection as temperature information of the main beam. The processing unit calculates a thermal expansion amount of the main beam at a position of the slider on the main beam detected by the encoder based on the temperature information of the main beam stored in the temperature information storage to correct the displacement of the slider relative to the main beam detected by the encoder based on the calculated thermal expansion amount.

According to the aspect of the invention, the temperature of the main beam and the displacement of the slider relative to the main beam detected by the encoder at the same time as the temperature detection are stored in the temperature information storage as the temperature information of the main beam. The processing unit calculates the thermal expansion amount of the main beam at the position of the slider based on the temperature information of the main beam stored in the temperature information storage and subtracts the calculated thermal expansion amount of the main beam from the displacement of the slider relative to the main beam to correct the measurement error on account of the thermal expansion of the main beam. Accordingly, the measurement error on account of the thermal expansion of the main beam can be avoided to achieve a further highly precise measurement.

Since the temperature information measured on a plurality of points on the main beam is stored in the temperature information storage, the measurement error on account of the thermal expansion of the main beam can be corrected using the average value of the plurality of points, thereby achieving a further precise correction. Alternatively, when the thermal expansion amount of the whole main beam is calculated by integrating the thermal expansion amounts between the temperature measuring points with the temperature distribution of the main beam obtained by the temperature information on the plurality of points taken into consideration, a still further precise correction can be achieved. Additionally, in the caliper gauge according to the aspect of the invention, since the temperature sensor is provided on the slider, the temperature measuring points can be increased, thereby easily improve measurement precision.

Note that, in order to calculate the thermal expansion amount of the main beam, a table storing the thermal expansion amounts of the main beam at predetermined temperatures may be used, or alternatively the thermal expansion rate of the main beam is used.

In the caliper gauge, the processing unit calculates the thermal expansion amount of the main beam at the position of the slider on the main beam detected by the encoder based on the temperature information of the main beam stored in the temperature information storage and a linear thermal expansion rate of the main beam stored in advance in the temperature information storage to correct the displacement of the slider relative to the main beam detected by the encoder based on the calculated thermal expansion amount.

According to the aspect of the invention, since the processing unit performs integration to obtain the thermal expansion amount of the main beam based on the temperature information of the plurality of points on the main beam and the thermal expansion rate of the main beam, a precise correction can be conducted while taking the temperature distribution of the main beam into consideration.

In order to calculate the thermal expansion amount of the main beam by integration, a method described below can be used.

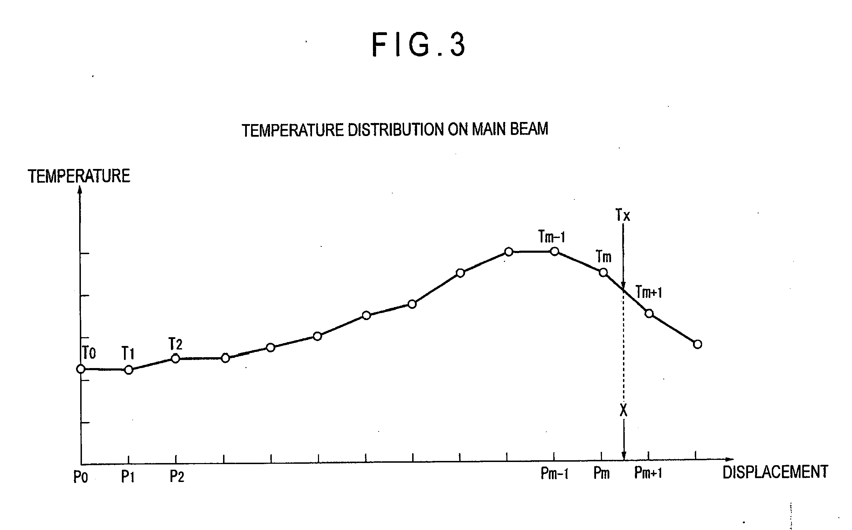

Fig. 3 shows an example of thermal distribution of the main beam. A plurality of temperature measurements are conducted on the main beam and $T_n$ represents the temperature on an $n$th temperature measuring point and $P_n$ represents the position of the temperature measuring point. $T_0$ and $P_0$ respectively represent a temperature and a position of the slider when the slider is moved to the end of the main beam on which the measuring jaws are provided. In Fig. 3, supporting that the position of the slider when the measuring jaws abut to the article to-be-measured is position X disposed between the $m$th temperature measuring point and the $m+1$th temperature measuring point, temperature $T_x$ of the main beam at the position X is approximately obtained using the following equation (1).

$$T_x = \frac{T_m\,(P_{m+1}-X) + T_{m+1}\,(X-P_m)}{P_{m+1}-P_m} \qquad \cdots\cdots\cdots\cdots (1)$$

Using temperature $T_x$ of the main beam at the position X and temperature $T_w$ of the article to-be-measured, a measurement error Err (i.e. the thermal expansion amount of the main beam) is obtained using the following equation (2). Note that $\alpha$ in the equation (2) represents a thermal expansion rate of the main beam which is stored in advance in the temperature information storage.

$$Err = \sum_{n=1}^{m} \frac{a\,(T_{n-1}+T_n-2T_w)\,(P_n-P_{n-1})}{2} + \frac{a\,(T_m+T_x-2T_w)\,(X-P_m)}{2}$$

$$\cdots\cdots\cdots\cdots (2)$$

By subtracting the measurement error Err from the position X, the measurement error on account of the thermal expansion of the main beam can be corrected.

The caliper gauge may further includes: a measurement controller that controls the temperature sensor to detect the temperature of the main beam each predetermined-distance advancement of the slider on the main beam and automatically stores the temperature of the main beam detected by the temperature sensor and the displacement of the slider relative to the main beam that is detected by the encoder concurrently with the temperature detection in the temperature information storage as the temperature information of the main beam.

According to the aspect of the invention; since the measurement controller automatically stores the temperature of the main beam in the temperature information storage each predetermined-distance advancement of the slider on the main beam, it is not necessary to repeat an operation in which the slider is moved and the temperature is measured in order to store the temperature distribution of the main beam, thereby facilitating the measurement.

In the caliper gauge, the encoder may be an electromagnetic-induction encoder that includes a scale provided on the main beam and a detector head provided on the slider, and the temperature sensor may be provided in the vicinity of the detector head to detect the temperature of the main beam in the vicinity of the scale.

In the caliper gauge that obtains the relative displacement of the slider using the electromagnetic-induction encoder having the scale and the detector head, the thermal expansion of the main beam, especially the thermal expansion in the vicinity of the scale severely affects the measurement value. Since the temperature sensor according to the aspect of the invention measures a temperature of the main beam in the vicinity of the scale, the measurement error on account of the thermal expansion can be corrected based on the temperature distribution of the main beam adjacent to the scale. Hence, the measurement error on account of the thermal expansion of the main beam can be highly precisely corrected.

In the caliper gauge, the temperature sensor may be an infrared radiation temperature sensor that detects a temperature of an article surface in a non-contact manner with the article based on infrared radiation from the article surface.

According to the aspect of the invention, since the temperature sensor does not contact with the main beam, the slider can be smoothly moved. Additionally, the infrared radiation temperature sensor can measure temperature in a shorter period of time as compared with other temperature sensors, thereby shortening the operation time.

**BRIEF DESCRIPTION OF THE DRAWINGS**

   Fig. 1 is a front view of a caliper gauge of an embodiment of the present invention;
   Fig. 2 is a schematic diagram showing an arrangement of a slider of the aforesaid embodiment; and
   Fig. 3 is a graph showing temperature distribution of a main beam of the caliper gauge of the aforesaid embodiment.

**DETAILED DESCRIPTION OF PREFERRED EMBODIMENT(S)**

An embodiment of the present invention will be described below with reference to the drawings.

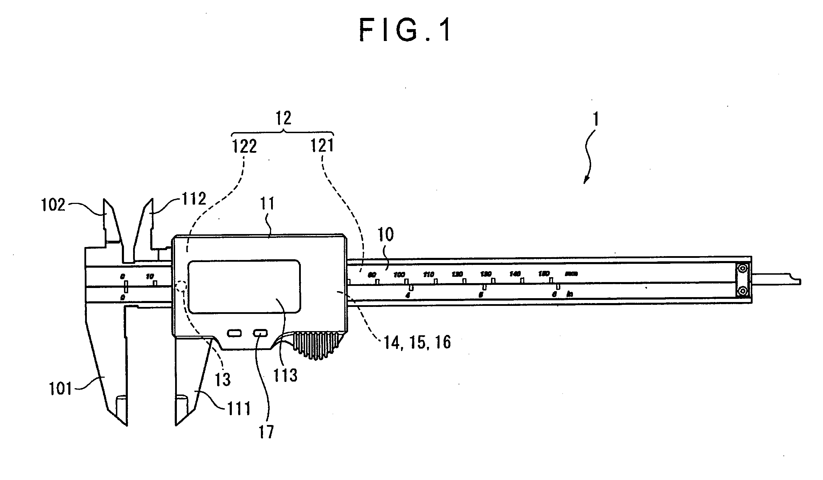

As shown in Fig. 1, a caliper gauge 1 of the embodiment includes a main beam 10, a slider 11 movable relative to the main beam 10 and an encoder 12 that detects a displacement of the slider 1 1 relative to the main beam 10 as an electric signal.

The main beam 10 includes an outside measuring jaw 101 and an inside measuring jaw 102 which are provided on one end (in a longitudinal direction) of the main beam 10.

The slider 11 includes: an outside measuring jaw 111 and an inside measuring jaw 112 which are provided on the one end and abut to a target portion of an article to-be-measured together with the outside measuring jaw 101 and the inside measuring jaw 102 of the main beam 10; and a display unit 113 that displays a measurement result.

The encoder 12 includes: an electromagnetic-induction scale 121 provided along the longitudinal direction of the main beam 10; and a detector head 122 that is provided on the slider 11 to detect a displacement of the slider 11 relative to the scale 121 in conjunction with the scale 121.

The slider 11 includes: a temperature sensor 13 that detects a temperature of the main beam 10; a temperature information storage 14 that stores temperature information of the main beam 10; a measurement controller 15 that automatically stores the temperature information of the main beam 10 in the temperature information storage 14 in accordance with movement of the slider 11; a processing unit 16 that corrects the displacement of the slider 11 based on the temperature information of the main beam 10; and an operation button 17.

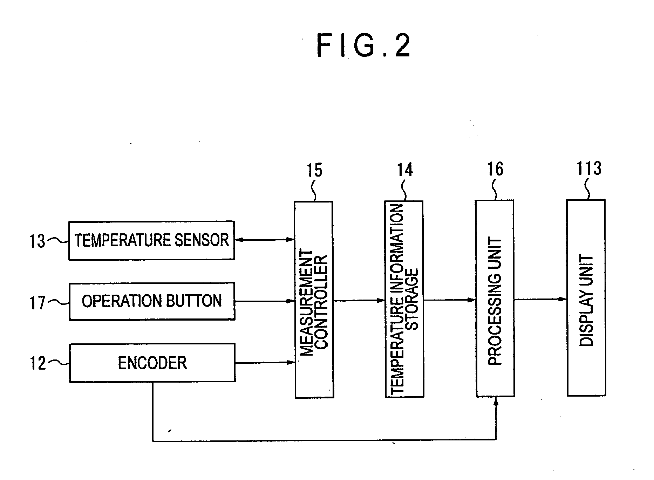

Fig. 2 shows an inner arrangement of the slider 11.

The temperature sensor 13 is an infrared radiation temperature sensor that detects a temperature of an article surface in a non-contact manner with the article based on infrared radiation from the article surface. The temperature sensor 13 is provided in the vicinity of the detector head 122 of the slider 11 to detect the temperature of the main beam 10 in the vicinity of the scale 121.

In the temperature information storage 14, the temperature of the main beam 10 detected by the temperature sensor 13 and the displacement of the slider 11 relative to the main beam 10 detected by the encoder 12 concurrently with the temperature detection are stored as the temperature information of the main beam 10. A linear thermal expansion rate of the main beam 10 is also stored in the temperature information storage 14.

The measurement controller 15 controls the temperature sensor 13 to detect the temperature of the main beam 10 each predetermined-distance advancement of the slider 11 on the main beam 10 and automatically stores the detected temperature of the main beam 10 and the displacement of the slider 11 detected by the encoder 12 concurrently with the temperature detection in the temperature information storage 14 as the temperature information of the main beam 10.

Based on the temperature information on a plurality of points of the main beam 10 stored in the temperature information storage 14 and the linear thermal expansion rate of the main beam 10 stored in advance in the temperature information storage 14, the processing unit 16 performs integration to obtain a thermal expansion amount of the main beam 10 at a point detected by the encoder 12 as the location of the slider 11. The obtained thermal expansion amount is subtracted from the displacement of the slider 11 relative to the main beam 10 detected by the encoder 12 to display the subtraction result on the display unit 113.

The operation button 17 is provided to delete the temperature information of the main beam 10 stored in the temperature information storage 14. When the operation button 17 is operated, the measurement controller 15 deletes the existing temperature information of the main beam 10 in the temperature information storage 14 and stores therein new temperature information of the main beam 10 at a point on which the slider 11 is located at the time.

Operations to measure a dimension of an article to-be-measured using the above-described caliper gauge 1 will be described below.

Prior to the dimension measurement, a temperature measurement is conducted on the main beam 10.

Firstly, an operator holds the main beam 10 in one hand with the thumb placed on the slider 11 and moves the slider 11 to the end of the main beam 10 on which the outside measuring jaw 101 and the inside measuring jaw 102 are provided. In this state, the operation button 17 is operated to delete the existing temperature information of the main beam 10 stored in the temperature information storage 14 and to store therein new temperature information of the main beam 10 at a point on which the slider 11 is located at the time.

Next, the slider 11 is moved along the main beam 10 to the other end of the main beam 10. During this movement, the measurement controller 15 controls the temperature sensor 13 to detect the temperature of the main beam 10 each predetermined-distance advancement of the slider 11 on the main beam 10. The measurement controller 15 automatically stores the detected temperature of the main beam 10 and the displacement of the slider 11 detected by the encoder 12 concurrently with the temperature detection in the temperature information storage 14 as the temperature information of the main beam 10. Thus, temperature distribution of the main beam 10 as in Fig. 3 is stored in the temperature information storage 14. Note that, in Fig. 3, $T_n$ represents a temperature on an $n^{th}$ temperature measuring point and $P_n$ represents a displacement of the slider 11 at the temperature. $T_0$ and $P_0$ respectively represent a temperature of the main beam 10 and a position of the slider 11 both measured when the slider 11 is moved to the end on which the outside measuring jaw 101 and the inside measuring jaw 102 of the main beam 10 are provided.

In the measurement, the slider 11 is moved from the other end of the main beam 10 such that the outside measuring jaws 101, 111 or the inside measuring jaws 102, 112 (the jaws 101, 111, 102 and 112 being provided on the main beam 10 and the slider 11) abut to a target portion of the article to-be-measured. The processing unit 16 then calculates the thermal expansion amount of the main beam 10 based on the temperature information of a plurality of points on the main beam 10 stored in the temperature information storage 14 and on the linear thermal expansion rate of the main beam 10 stored in advance in the temperature information storage 14 subtracts the calculated thermal expansion amount from the displacement of the slider 11 to display the subtraction result on the display unit 113. The dimension of the article to-be-measured and the like can be obtained from the value displayed on the display unit 113.

The processing unit 16 calculates the thermal expansion amount of the main beam 10 as follows.

In Fig. 3, supporting that the slider 11 is located at the position X disposed between an $m^{th}$ temperature measuring point and the $m+1^{th}$ temperature measuring point when the outside measuring jaws 101, 111 or the inside measuring jaws 102, 112 abut to the target portion of the article to-be-measured, temperature $T_x$ of the main beam 10 at the position X is approximately obtained using the following equation (1).

$$T_x = \frac{T_m (P_{m+1} - X) + T_{m+1} (X - P_m)}{P_{m+1} - P_m} \qquad \cdots\cdots\cdots\cdots \quad (1)$$

Using temperature $T_x$ of the main beam at the position X and temperature $T_w$ of the article to-be-measured, a measurement error Err (i.e. the thermal expansion amount of the main beam 10) is obtained using the following equation (2). Note that $\alpha$ in the equation (2) represents a thermal expansion rate of the main beam 10 which is stored in advance in the temperature information storage 14.

$$Err = \sum_{n=1}^{m} \frac{a(T_{n-1} + T_n - 2T_w)(P_n - P_{n-1})}{2} + \frac{a(T_m + T_x - 2T_w)(X - P_m)}{2}$$

$$\cdots\cdots\cdots\cdots \quad (2)$$

By subtracting the measurement error Err from the position X, the measurement error on account of the thermal expansion of the main beam 10 can be corrected.

The present embodiment can provide following effects.

(1) Since the processing unit 16 calculates the thermal expansion amount of the main beam 10 and the measurement error on account of the thermal expansion of the main beam 10 is corrected by subtracting the thermal expansion amount of the main beam 10 from the displacement of the slider 11 relative to the main beam detected by the encoder 12, the measurement error on account of the thermal expansion of the main beam 10 can be avoided, thereby ensuring a highly precise measurement.

(2) Since the processing unit 16 corrects the measurement error on account of the thermal expansion of the main beam 10, a highly precise measurement can be achieved without employing a particular method such as conducting the measurement in a temperature-controlled room to eliminate the thermal expansion of the main beam 10. In other words, since the main beam 10 can be held by hand in a manner similar to the related-art caliper gauge 1, a highly precise measurement can be easily conducted.

(3) Since the temperature sensor 13 is provided on the slider 11, the temperature sensor 13 can be moved together with the slider 11 along the main beam 10. Accordingly, the temperature on a to-be-measured point of the main beam 10 can be measured by a single temperature sensor 13, which reduces the number of components and simplifies the wiring, thereby reducing production cost.

(4) Since the processing unit 16 calculates the thermal expansion amount of the main beam 10 based on the temperature information and the thermal expansion rate of the main beam 10, the thermal expansion amount can be precisely calculated as compared with a method for obtaining the thermal expansion amount of the main beam 10 with a table only storing the thermal expansion amount of the main beam 10 measured at predetermined temperatures.

(5) Since the processing unit 16 performs integration to obtain the thermal expansion amount of the main beam 10 based on the temperature information of a plurality of points on the main beam 10 and the thermal expansion rate of the main beam 10, a precise correction can be conducted while taking the temperature distribution of the main beam 10 into consideration.

(6) Since the temperature sensor 13 measures the temperature of the main beam 10 in the vicinity of the scale 121, the measurement error on account of the thermal expansion can be corrected based on the temperature distribution of the main beam 10 adjacent to the scale 121. Hence, the measurement error on account of the thermal expansion of the main beam 10 can be highly precisely corrected.

(7) Since an infrared radiation temperature sensor is used as the temperature sensor 13, which does not contact with the main beam 10, the slider 11 can be smoothly moved. The infrared radiation temperature sensor can measure temperature in a shorter period of time as compared with other temperature sensors 13, thereby shortening the operation time.

(8) Since the measurement controller 15 automatically stores the temperature of the main beam 10 in the temperature information storage 14 each predetermined-distance advancement of the slider 11 on the main beam 10, it is not necessary to repeat an operation in which the slider 11 is moved and the temperature is measured in order to store the temperature distribution of the main beam 10, thereby facilitating the measurement.

Note that the present invention is not limited to the above-described embodiment but includes other arrangements as long as an object of the invention can be achieved, which includes following modifications and the like.

(i) The encoder 12 is not limited to the electromagnetic-induction encoder mentioned in the embodiment as long as the encoder 12 can detect the relative displacement of the main beam 10 and the slider 11. For example, an optical or electrostatic encoder may be used.

(ii) The thermal expansion amount of the main beam 10 may be calculated using a method other than the calculation method mentioned in the embodiment. For instance, the integration may not be employed and the measurement error on account of the thermal expansion of the main beam 10 may be corrected using the average value of the temperatures measured on a plurality of points on the main beam 10.

(iii) The main beam 10 may not be measured at a plurality of points and the measurement may be conducted only at one point. For example, an arrangement may be employed, in which when the outside measuring jaws 101, 111 or the inside measuring jaws 102, 112 that are provided on the main beam 10 and the slider 11 abut to the target portion of the article to-be-measured, the encoder 12 detects the displacement of the slider 11 relative to the main beam 10 and the temperature sensor 13 detects the temperature of a portion of the main beam 10 corresponding to the position of the slider 11.

Even in the arrangement, the measurement error on account of the thermal expansion of the main beam 10 can be corrected based on the temperature of the portion of the main beam 10 corresponding to the position of the slider 11 (i.e. based on the temperature of the target portion of the main beam 10), so that precise correction can be conducted. When highly precise measurement is not required and the temperature is always measured at a single point, it is not necessary to store the temperature information, so that the temperature information storage 14 may not be provided.

(iv) In the above-described embodiment, the measurement controller 15 automatically stores the temperature information of the main beam 10 in the temperature information storage 14 each predetermined-distance advancement of the slider 11 on the main beam 10. The predetermined distance may be changed by an operation on the operation button 17. In this arrangement, the number of the temperature measuring points on the main beam 10 can be increased or decreased as desired. With the increased number of the measurement points, the correction can be conducted more precisely based on more detailed temperature distribution. On the other hand, with the decreased number of the measurement points, the correction calculation conducted by the processing unit 16 becomes simpler, so that the measurement result can be quickly displayed on the display unit 113.

**Claims**

1. A caliper gauge, comprising:

a main beam (10) that includes a first measuring jaw (101, 102);
a slider (11) that is movably provided on the main beam (10) and includes a second measurement jaw (111, 112), the first measurement jaw (101, 102) and the second measurement jaw (111,112) abutting to a target portion of an article to-be-measured;
an encoder (12) that detects a displacement of the slider (11) relative to the main beam (10) as an electric signal;
a temperature sensor (13) that is provided on the slider (11) and detects a temperature of the main beam (10); and

a processing unit (16) that, when the slider (11) is moved to a position on the main beam (10), corrects the displacement of the slider (11) relative to the main beam (10) detected by the encoder (12) based on the temperature of the main beam (10) detected by the temperature sensor (13).

2. The caliper gauge according to Claim 1, further comprising:

a temperature information storage (14) that stores the temperature of the main beam (10) detected by the temperature sensor (13) and the displacement of the slider (11) relative to the main beam (10) which is detected by the encoder (12) concurrently with the temperature detection as temperature information of the main beam (10), wherein
the processing unit (16) calculates a thermal expansion amount of the main beam (10) at a position of the slider (11) on the main beam (10) detected by the encoder (12) based on the temperature information of the main beam (10) stored in the temperature information storage (14) to correct the displacement of the slider (11) relative to the main beam (10) detected by the encoder (12) based on the calculated thermal expansion amount.

3. The caliper gauge according to Claim 2, wherein
the processing unit (16) calculates the thermal expansion amount of the main beam (10) at the position of the slider (11) on the main beam (10) detected by the encoder (12) based on the temperature information of the main beam (10) stored in the temperature information storage (14) and a linear thermal expansion rate of the main beam (10) stored in advance in the temperature information storage (14) to correct the displacement of the slider (11) relative to the main beam (10) detected by the encoder (12) based on the calculated thermal expansion amount.

4. The caliper gauge according to Claim 2, wherein
the processing unit (16) performs integration to obtain the thermal expansion amount of the main beam (10) at the position of the slider (11) on the main beam (10) detected by the encoder (12) based on the temperature information of the main beam (10) stored in the temperature information storage (14) and the linear thermal expansion rate of the main beam (10) stored in advance in the temperature information storage (14) to correct the displacement of the slider (11) relative to the main beam (10) detected by the encoder (12) based on the obtained thermal expansion amount.

5. The caliper gauge according to any one of Claims 2 to 4, further comprising:

a measurement controller (15) that controls the temperature sensor (13) to detect the temperature of the main beam (10) each predetermined-distance advancement of the slider (11) on the main beam (10) and automatically stores the temperature of the main beam (10) detected by the temperature sensor (13) and the displacement of the slider (11) relative to the main beam (10) that is detected by the encoder (12) concurrently with the temperature detection in the temperature information storage (14) as the temperature information of the main beam (10).

6. The caliper gauge according to any one of Claims 1 to 5, wherein
the encoder (12) is an electromagnetic-induction encoder that includes a scale (121) provided on the main beam (10) and a detector head (12) provided on the slider (11), and
the temperature sensor (13) is provided in the vicinity of the detector head (122) to detect the temperature of the main beam (10) in the vicinity of the scale (121).

7. The caliper gauge according to any one of Claims 1 to 6, wherein
the temperature sensor (13) is an infrared radiation temperature sensor that detects a temperature of an article surface in a non-contact manner with the article based on infrared radiation from the article surface.

FIG.1

# FIG.2

113 —⌒ DISPLAY UNIT

16 —⌒ PROCESSING UNIT

14 —⌒ TEMPERATURE INFORMATION STORAGE

15 —⌒ MEASUREMENT CONTROLLER

13 —⌒ TEMPERATURE SENSOR

17 —⌒ OPERATION BUTTON

12 —⌒ ENCODER

# FIG.3

## TEMPERATURE DISTRIBUTION ON MAIN BEAM

EP 1 898 177 A1

**European Patent Office**

## EUROPEAN SEARCH REPORT

Application Number

EP 07 01 7508

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2005/081400 A1 (MATSUMIYA SADAYUKI [JP] ET AL) 21 April 2005 (2005-04-21)<br>* abstract; figure 1 *<br>* paragraph [0098] - paragraph [0115] *<br>----- | 1-7 | INV.<br>G01B21/04<br>G01B3/20<br>G01D3/036 |
| Y | DE 196 01 275 A1 (HEIDENHAIN GMBH DR JOHANNES [DE]) 24 July 1997 (1997-07-24)<br>* abstract; figure 1 *<br>* column 1 - column 2 *<br>----- | 1-7 | |
| A | DE 100 07 540 A1 (BROWN & SHARPE GMBH [DE]) 13 September 2001 (2001-09-13)<br>* abstract *<br>* column 1 - column 2 *<br>----- | 1-7 | |
| A | DE 102 25 243 A1 (HEIDENHAIN GMBH DR JOHANNES [DE])<br>18 December 2003 (2003-12-18)<br>* abstract; figure 1 *<br>----- | 1-7 | |
| | | | **TECHNICAL FIELDS SEARCHED (IPC)**<br><br>G01B<br>G01D |

The present search report has been drawn up for all claims

| Place of search | Date of completion of the search | Examiner |
|---|---|---|
| Berlin | 6 November 2007 | VORROPOULOS, G |

EPO FORM 1503 03.82 (P04C01)

## ANNEX TO THE EUROPEAN SEARCH REPORT
## ON EUROPEAN PATENT APPLICATION NO.

EP 07 01 7508

This annex lists the patent family members relating to the patent documents cited in the above-mentioned European search report.
The members are as contained in the European Patent Office EDP file on
The European Patent Office is in no way liable for these particulars which are merely given for the purpose of information.

06-11-2007

| Patent document cited in search report | | Publication date | Patent family member(s) | | Publication date |
|---|---|---|---|---|---|
| US 2005081400 | A1 | 21-04-2005 | NONE | | |
| DE 19601275 | A1 | 24-07-1997 | NONE | | |
| DE 10007540 | A1 | 13-09-2001 | NONE | | |
| DE 10225243 | A1 | 18-12-2003 | US | 2004024488 A1 | 05-02-2004 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000346601 A